# EUROPEAN PATENT APPLICATION

(11) **EP 4 597 622 A1**
(43) Date of publication of application: **06.08.2025**
(21) Application number: 24223711.3
(22) Date of filing: 30.12.2024
(51) Int. Cl.: H01M 4/505, C01G 1/00, H01M 4/525, H01M 4/48, H01M 10/54, H01M 10/0525, H01M 4/131, H01M 4/02

(54) **PRODUCTION METHOD FOR POSITIVE ELECTRODE ACTIVE MATERIAL**

(30) Priority: 31.01.2024 JP 2024013027
(71) Applicant: Prime Planet Energy & Solutions, Inc., Chuo-ku, Tokyo 103-0022 (JP)
(72) Inventor: YAMAMOTO, Yuji, Tokyo, 103-0022 (JP)
(74) Representative: Kuhnen & Wacker Patent- und Rechtsanwaltsbüro PartG mbB

(57) **Abstract**

The present disclosure is intended to provide a production method for a positive electrode active material with reduced degradation in resistance property. The technology disclosed herein relates to a production method for a positive electrode active material after sintering, the method comprising: a preparation step of preparing an end material that includes a positive electrode composite material including a positive electrode active material for a secondary battery and a binder containing fluorine; and a sintering step of sintering the positive electrode composite material in a container, wherein the sintering step is performed with magnesium hydroxide present in the container. Consequently, a positive electrode active material with reduced degradation in resistance property is achieved.

## Description

### BACKGROUND

The technology disclosed herein relates to a production method for a positive electrode active material.

In recent years, secondary batteries have been suitably used in portable power sources for personal computers, mobile terminals, etc., as well as in power sources for driving vehicles such as electric vehicles (BEVs), hybrid vehicles (HEVs), and plug-in hybrid vehicles (PHEVs), and the like.

Positive electrode active materials are commonly used in positive electrodes for secondary batteries. Recently, there has been a growing demand for recovery technologies to recover metals (e.g., lithium, nickel, cobalt, etc.) contained in the positive electrode active material from end materials of positive electrode plates or the like and reuse them as materials for secondary batteries. Furthermore, in the study of the aforementioned recovery technologies, efforts are underway to develop technologies for recovering and regenerating positive electrode active materials directly from positive electrode plates, without restoring them to the metal level. As an example of such a technology, specifically, JP2023-516430A discloses a recovery method for an active metal in a lithium secondary battery. This method involves: preparing a preliminary positive electrode active material mixture including a lithium composite oxide and a binder; forming a positive electrode active material mixture by removing the binder from the preliminary positive electrode active material mixture through heat treatment in a fluidized bed reactor; and collecting a lithium precursor from the positive electrode active material mixture.

### SUMMARY

Incidentally, in conventional secondary batteries, a binder containing fluorine is sometimes used as the binder. This fluorine-containing binder is typically difficult to decompose under heat. According to the inventors' study, it has been found that the technology described in the JP2023-516430A cannot completely remove fluorine from the binder, leading to a degradation in resistance property of the resulting positive electrode active material, compared to that of a new positive electrode active material.

The present disclosure has been made in view of the circumstances described above and is intended to provide a production method for a positive electrode active material with reduced degradation in resistance property.

To address the above-mentioned problems, there is provided a production method for a positive electrode active material (hereinafter also simply referred to as a "production method") with the following configuration.

The technology disclosed herein relates to a production method for a positive electrode active material after sintering, the method comprising: a preparation step of preparing an end material that includes a positive electrode composite material including a positive electrode active material for a secondary battery that has never been performing intercalation and deintercalation of a charge carrier and a binder containing fluorine; and a sintering step of sintering the positive electrode composite material in a container, wherein the sintering step is performed with magnesium hydroxide present in the container.

In the production method with the above configuration, the positive electrode composite material is placed into the container and further sintered with magnesium hydroxide present therein during the sintering step. This configuration allows the magnesium hydroxide to promote the decomposition of the binder in the positive electrode composite material, thus producing a positive electrode active material from which fluorine contained in the binder has been suitably removed after the sintering. Therefore, the positive electrode active material with reduced degradation in resistance property can be obtained.

### BRIEF DESCRIPTION OF THE DRAWINGS

FIG. 1 is a schematic cross-sectional view of a positive electrode plate according to a present embodiment, taken along its thickness and width directions.
FIG. 2 is a flowchart for explaining a production method according to the present embodiment.
FIG. 3 is a flowchart for explaining a production method according to a modification.

### DETAILED DESCRIPTION

Hereinafter, embodiments of the technology disclosed herein will be described with reference to the drawings. Matters other than those specifically mentioned in the present specification that are necessary for implementing the technology disclosed herein may be understood as design matters of those skilled in the art based on the conventional technology in the field. The technology disclosed herein can be implemented based on the contents disclosed in the present specification and the technical common knowledge in the field.

In the present specification, the term "secondary battery" refers to all electricity storage devices in which charging and discharging can be repeatedly conducted by transfer of charge carriers between a positive electrode and a negative electrode via an electrolyte. In the present specification, the notation "A to B" for a range includes the meanings of "preferably more than A" and "preferably less than B", as well as the meaning of A or more and B or less.

A production method for a positive electrode active material after sintering according to the present embodiment (hereinafter also just referred to as a "production method for a positive electrode active material") is performed using an end material that includes a positive electrode composite material including a positive electrode active material for a secondary battery and a binder containing fluorine. Note that the term "end material including the positive electrode composite material" in the present specification refers to an end material including a positive electrode composite material that containing a positive electrode active material that has never been performing intercalation and deintercalation of a charge carrier. That is, this term "end material including the positive electrode composite material" also includes end materials of positive electrode composite materials generated during the production of secondary batteries, positive electrode composite materials that have become out of specification, positive electrode composite materials taken out of battery assemblies that have become out of specification before charging/discharging, and the like.

### 1. End material Including Positive Electrode Composite Material

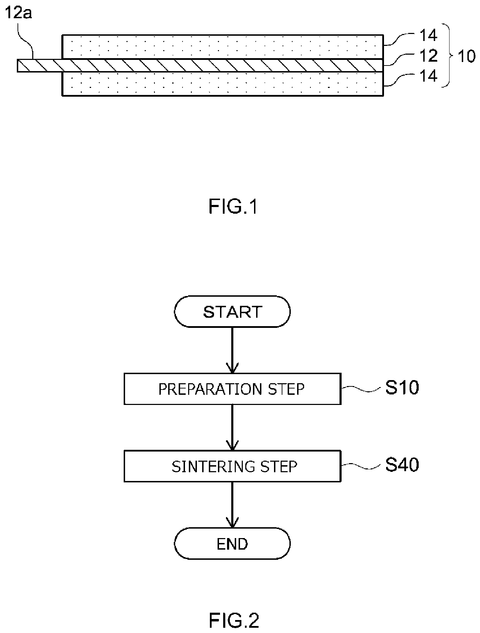

An example of an end material including a positive electrode composite material is a positive electrode plate of a lithium-ion secondary battery that uses lithium ions as a charge carrier. In the following, the end material that includes the positive electrode composite material will be described in detail by using the positive electrode plate of a lithium-ion secondary battery as an example. However, it is not intended to limit the technology disclosed herein to that described in such embodiments. FIG. 1 is a schematic cross-sectional view of a positive electrode plate 10 according to the present embodiment, taken along its thickness and width directions. The positive electrode plate 10 is an example of the "end material including the positive electrode composite material" in the technology disclosed herein.

As shown in FIG. 1, the positive electrode plate 10 includes a positive electrode current collector 12 and positive electrode composite material layers 14 supported by the positive electrode current collector 12. The positive electrode composite material layer 14 is provided on each side of the positive electrode current collector 12 in the example shown. However, the positive electrode composite material layer 14 may be provided only on one side of the positive electrode current collector 12.

As shown in FIG. 1, the positive electrode plate 10 may have, at its one end in the width direction, an unformed portion 12a of the positive electrode composite material layer, where no positive electrode composite material layer 14 is provided. The unformed portion 12a of the positive electrode composite material layer is a portion where the positive electrode current collector 12 is exposed and functions as a current collector.

As the positive electrode current collector 12, any known positive electrode current collector used in conventional secondary batteries may be used. For example, an aluminum sheet or foil may be used from the viewpoint of good conductivity. The dimensions of the positive electrode current collector 12 are not particularly limited because they can be changed as appropriate according to capacity and size of the secondary battery. When an aluminum foil is used as the positive electrode current collector 12, its thickness is not particularly limited, but can be, for example, 5 µm or more and 35 µm or less.

The positive electrode composite material layer 14 is a layer made of the positive electrode composite material that includes a positive electrode active material, a binder, and the like. The positive electrode active material is a material that can reversibly absorb and release charge carriers (e.g., lithium). When lithium ions are used as the charge carrier, examples of such positive electrode active materials include lithium transition metal composite oxides such as lithium nickel composite oxide, lithium cobalt composite oxide, lithium manganese composite oxide, lithium nickel manganese composite oxide, lithium manganese cobalt composite oxide, lithium nickel cobalt composite oxide, and lithium nickel cobalt manganese composite oxide. Other examples of the positive electrode active materials include lithium transition metal phosphate compounds such as lithium iron phosphate, lithium manganese phosphate, and lithium iron manganese phosphate.

The term "lithium nickel cobalt manganese composite oxide" as used in the present specification is a term that encompasses not only oxides containing, as constituent elements, Li, Ni, Co, Mn, and O, but also oxides containing one or more other additive elements in addition to these. Examples of such additive elements include transition metal elements such as Mg, Ca, Al, Ti, V, Cr, Y, Zr, Nb, Mo, Hf, Ta, W, Na, Fe, Zn, and Sn, and typical metal elements. Alternatively, examples of the additive elements may also include semi-metallic elements such as B, C, Si, and P, and non-metallic elements such as S, F, Cl, Br, and I. This can also be applied for the lithium nickel composite oxide, lithium cobalt composite oxide, lithium manganese composite oxide, lithium nickel manganese composite oxide, lithium manganese cobalt composite oxide, lithium nickel cobalt composite oxide, etc. described above.

The positive electrode active material may be in the form of, for example, either primary particles or secondary particles. Note that in the present specification, the term "primary particle" refers to the smallest unit of particles constituting the positive electrode active material, specifically, the smallest unit judged from its geometric form in appearance. Furthermore, in the present specification, the term "secondary particle" refers to an aggregate of such primary particles. The secondary particle can be in the form of, for example, an aggregation of two or more and 100 or less primary particles.

A D50 particle size (average particle size) of the positive electrode active material is not particularly limited, but is typically 0.05 µm or more and 25 µm or less in terms of the primary particle unit, for example, 1 µm or more and 20 µm or less, and preferably 3 µm or more and 15 µm or less. In the present specification, the term "D50 particle size" means a particle size corresponding to a cumulative frequency of 50% by volume from the side of fine particles with smaller particle size in a volume-based particle size distribution based on a laser diffraction and scattering method. The D50 particle size can be determined based on the particle size distribution provided by a known laser diffraction and scattering system.

As the binder, a polymer that can dissolve or disperse in the used solvent can be employed. The technology disclosed herein employs a binder containing fluorine as the binder. Examples of usable binders containing fluorine include polyvinylidene fluoride (PVDF), polytetrafluoroethylene (PTFE), and the like. However, in addition to the binder containing fluorine, a binder not containing fluorine may be used in combination as the above binder. Examples of such binders that are usable include styrene butadiene rubber (SBR), carboxymethyl cellulose (CMC), and the like.

The positive electrode composite material layer 14 can contain any optional components as appropriate, in addition to the positive electrode active material and the binder. Such optional components include conductive materials and the like.

Examples of conductive materials that are usable include solid carbons, such as carbon black (acetylene black, furnace black, Ketjen black, thermal black, etc.), coke, activated carbon, graphite (natural graphite and its modifications, and artificial graphite), carbon fiber (PAN-based carbon fiber, pitch-based carbon fiber), fullerene, graphene, and the like.

The positive electrode plate 10 used in a lithium-ion secondary battery has been described above as an example of the end material including the positive electrode composite material as a preparation subject in the production method according to the present embodiment. However, the production method disclosed herein is not limited only to the method that employs, as the preparation subject, the positive electrode plate 10 with the above configuration, used in the lithium-ion secondary battery.

### 2. Production Method for Positive Electrode Active Material

The production method for the positive electrode active material according to the present embodiment will be described below. FIG. 2 is a flowchart for explaining the production method according to the present embodiment. As shown in FIG. 2, the production method for a positive electrode active material according to the present embodiment includes a preparation step S10 and a sintering step S40. The production method disclosed herein may further include other steps at any stages, and the production processes of the other steps may be identical to those in conventional methods. Hereinafter, each step will be described.

### (1) Preparation step S10

In the preparation step S 10, the end material that includes the positive electrode composite material including the positive electrode active material for a secondary battery and the binder containing fluorine is prepared. The technology disclosed herein is characterized by preparing the end material that includes the positive electrode composite material including the positive electrode active material for a secondary battery and the binder containing fluorine. Other configurations are the same as those conventionally known. Since the details of the end material have been already described, a redundant explanation thereof is omitted.

The end material may be prepared as a positive electrode plate as described above, or it may be prepared in the state of a positive electrode composite material only (e.g., in the state of a positive electrode current collector removed from the positive electrode plate). In the present embodiment, the end material in the state of the positive electrode composite material only (positive electrode composite material layer) is prepared as an example. The form of the end material during the preparation step S10 is not particularly limited, and may be cut into pieces depending on the scale of a facility or the like at the time of production.

### (2) Sintering step S40

In the sintering step S40, the positive electrode composite material is sintered (heated) in a container. Consequently, the binder contained in the positive electrode composite material can be decomposed and removed therefrom. The technology disclosed herein is characterized in that the sintering step S40 is performed with magnesium hydroxide (Mg(OH)₂) present in the container. The phrase "with magnesium hydroxide present in the container" in the present specification indicates a state in which magnesium hydroxide is arranged in the same space within the container as the positive electrode composite material is arranged. That is, in the sintering step S40 of the production method disclosed herein, the positive electrode composite material and magnesium hydroxide are sintered in the same space within the container. Note that each of the positive electrode composite material and magnesium hydroxide may be put individually into the container at the timing before the sintering step S40 (before sintering). Alternatively, a mixture of the positive electrode composite material and magnesium hydroxide may be put into the container.

Conventionally, the binder containing fluorine has properties such as being difficult to decompose when heated. Thus, when the binder contains fluorine, it becomes difficult to decompose simply through sintering the positive electrode composite material, making the fluorine less likely to be removed from the positive electrode composite material. If a large amount of fluorine remains in a sintered material (positive electrode active material) obtained after the sintering, the resistance property of the positive electrode active material after production may deteriorate. In the technology disclosed herein, the sintering step S40 is performed with magnesium hydroxide present in the above container. With such a configuration, thermal decomposition of the binder is promoted. Thus, fluorine can be suitably removed from the positive electrode composite material through the sintering step S40 to obtain a positive electrode active material with reduced degradation in resistance property. Although the details of a mechanism to promote the thermal decomposition of the binder described above are not certain, it is assumed to be as follows. First, magnesium hydroxide reacts with an alkyl group(s) in the binder, resulting in carbonation of an alkaline earth metal(s) and decarbonation of the binder. Then, the decarbonated binder is presumed to facilitate the decomposition of fluoride ions in the binder by forming a highly reactive intermediate.

The average particle size of magnesium hydroxide is not particularly limited, but from the viewpoint of uniform reaction with the binder, it is, for example, 50 µm or less, preferably 10 µm or less, and more preferably 5 µm or less. Meanwhile, the lower limit of the average particle size of magnesium hydroxide is not particularly limited, but can be, for example, 0.1 µm or more. The term "average particle size of magnesium hydroxide" can be measured using a laser particle size distribution meter.

Magnesium hydroxide is preferably present in a proportion of 0.01 wt% or more (more suitably, 0.03 wt% or more) when the entire amount (total amount) of the positive electrode composite material used in the sintering step is 100 wt%. The higher the presence proportion of the magnesium hydroxide in the sintering step S40, the more suitably the binder contained in the positive electrode composite material decomposes, which enables the removal of fluorine. Meanwhile, from the viewpoint of securing a movement path of the charge carriers in the positive electrode active material to achieve suitable resistance property, the proportion of magnesium hydroxide is preferably 3 wt% or less (more suitably 1 wt% or less, even more suitably 0.7 wt% or less) when the entire amount (total amount) of the positive electrode composite material used in the sintering step S40 is 100 wt%. Thus, in some preferred embodiments, magnesium hydroxide is preferably present in a proportion of 0.01 wt% or more and 3 wt% or less, and more preferably 0.03 wt% or more and 1 wt% or less. Therefore, in some preferred embodiments, in the sintering step S40, magnesium hydroxide is preferably present in a proportion of 0.01 wt% or more and 3 wt% or less, and more preferably 0.03 wt% or more and 1 wt% or less when the entire amount of the positive electrode composite material is 100 wt%. Thus, the movement path of the charge carriers in the positive electrode active material can be fully secured while suitably removing fluorine from the positive electrode composite material when sintering the positive electrode composite material. Therefore, the positive electrode active material in which degradation in resistance property is more suitably reduced can be obtained.

The sintering temperature in the sintering step S40 (in other words, the maximum temperature during the sintering process, more specifically, the temperature in the container) is preferably 500°C or higher (more suitably, 600°C or higher) from the viewpoint of suitably removing fluorine contained in the binder in the positive electrode composite material. The higher the sintering temperature during the sintering step S40, the more the decomposition of carbon in the binder contained in the positive electrode composite material is promoted, thus enabling the removal of fluorine more suitably. Meanwhile, from the viewpoint of crystal growth of the positive electrode active material, the sintering temperature in the sintering step S40 (in other words, the maximum temperature during the sintering process, more specifically, the temperature in the container) is preferably 900°C or lower (more suitably, 800°C or lower). Therefore, in some preferred embodiments, the sintering step S40 is preferably performed within a temperature range of 500°C to 900°C, and more preferably within 600°C to 800°C.

In the sintering step S40, the sintering is preferably performed in a state (mixed state) where the positive electrode composite material and magnesium hydroxide are mixed. Thus, magnesium hydroxide can efficiently promote the decomposition of the binder contained in the positive electrode composite material. However, it is not necessary to completely and uniformly mix the positive electrode composite material and magnesium hydroxide. A mixing method of the positive electrode composite material and magnesium hydroxide can be wet mixing or dry mixing, and any conventionally known methods can be used without limitation. For example, the mixing can be performed using any known stirring devices and/or mixing devices, such as a mortar, a shaker mixer, a Loedige (Lödige) mixer, a Julia mixer, a V-type mixer, and a ball mill.

As the container used in the sintering step S40, a conventionally known container used for sintering can be selected as appropriate depending on the scale of the facility. Examples of the above containers include batch sintering furnaces, roller hearth kilns, rotary kilns, and the like.

A sintering atmosphere in the sintering step S40 is preferably an oxygen-containing atmosphere, for example, an oxygen atmosphere or an atmospheric atmosphere. The oxygen concentration of the oxygen-containing atmosphere is preferably 10 vol% or more, and more preferably 18 to 100 vol%.

A sintering time in the sintering step S40 is not particularly limited because it depends on the amount of positive electrode composite material, the container used, and the like. The sintering time in the sintering step S40 is, for example, preferably 1 to 12 hours, and more preferably 2 to 8 hours.

The production method for the positive electrode active material according to the present embodiment has been described above. The production method according to the present embodiment includes the preparation step S10 and the sintering step S40 as described above. In the production method according to the present embodiment, fluorine contained in the positive electrode composite material is suitably removed in the sintering step S40. Therefore, the resulting sintered body can be used as a positive electrode active material as it is. The positive electrode active material obtained by the production method disclosed herein can be handled in the same manner as the conventional positive electrode active material. Alternatively, the thus-obtained positive electrode active material and a new positive electrode active material may be used in combination.

### 3. Other Embodiments

The technology disclosed herein is not limited to the embodiment described above, but includes other embodiments with various changes in the configuration. Other embodiments of the technology disclosed herein will be described below.

### (1) Preparation subject

For example, in the above embodiment, a positive electrode composite material (positive electrode composite material layer) is prepared as the end material to be prepared in the preparation step S10. However, the end material is not limited to this, and a positive electrode plate including the positive electrode composite material layer described above and a positive electrode current collector may also be prepared as the end material. Alternatively, a positive electrode plate that has become out of specification may be prepared. In addition, after a secondary battery assembly is assembled at the production site of the secondary battery, some defects may occur before charging or discharging the battery, potentially rendering the battery unusable as a product. The end material prepared in the production method disclosed herein may be a positive electrode plate taken out from such a secondary battery assembly. That is, the end material prepared in the production method disclosed herein is not particularly limited to a specific form. Any other configurations of the secondary battery assembly, aside from the configuration of the above-mentioned positive electrode plate, do not characterize the technology disclosed herein, and thus a description there is omitted.

The end material prepared in the preparation step S10 may be in a state after an electrolyte is adhered thereto (e.g., removed from the secondary battery). When preparing the end material after the electrolyte is adhered thereto, the electrolyte may remain adhered, or the electrolyte attached to the positive electrode plate may be washed off. However, from the viewpoint of work efficiency, the positive electrode plate prepared in the preparation step S10 is preferably in a state before the electrolyte is adhered.

In some preferred embodiments, the positive electrode active material contained in the positive electrode composite material of the end material prepared in the preparation step S10 preferably include a lithium composite oxide with a layered structure. Typically, the radius of a Mg ion (Mg²⁺) (0.72 Å) is close to the radius of a Li ion (Li⁺) (0.76 Å). When the positive electrode active material contained in the end material is a lithium composite oxide with a layered structure, Mg ions derived from magnesium hydroxide enter a Li site of a Li layer of the positive electrode active material during the sintering step S40. This can stabilize the Li layer of the positive electrode active material and improve durability property more suitably. Examples of lithium composite oxides with the above layered structure include lithium nickel composite oxide, lithium cobalt composite oxide, lithium nickel manganese cobalt composite oxide, and the like.

### (2-1) Other Steps

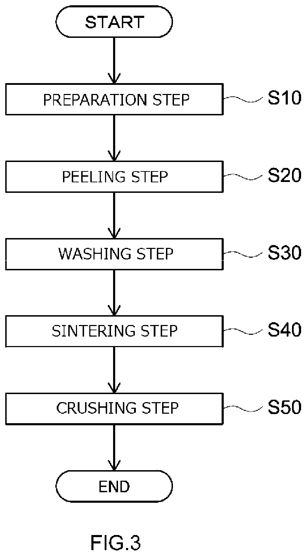

In the production method according to the present embodiment described above, the sintering step S40 is performed subsequent to the preparation step S10. However, the technology disclosed herein is not limited to this. A modification of the technology disclosed herein will be described below. FIG. 3 is a flowchart for explaining a production method according to the modification. As shown in FIG. 3, in addition to the embodiment described above, the method herein further includes a peeling step S20, a washing step S30, and a crushing step S50. That is, in the production method disclosed herein, any step can be added, deleted, or changed as necessary.

### (2-2) Peeling step S20

In some preferred embodiments, the peeling step S20 can be performed. In the peeling step S20, the positive electrode composite material is peeled off from the end material prepared in the preparation step S 10 (in other words, the positive electrode current collector is removed) . The peeling step S20 can employ conventionally known methods and is not particularly limited. For example, the peeling step S20 can be performed by immersing the end material in an alkaline solution. Consequently, the positive electrode current collector (aluminum) of the positive electrode plate dissolves in the alkaline solution. Meanwhile, the positive electrode composite material does not dissolve in the alkaline solution and remains as a solid in the alkaline solution. The positive electrode composite material is then recovered from the alkaline solution by solid-liquid separation (filtration, centrifugal separation, decantation, or the like). This allows the positive electrode composite material to be peeled off from the end material.

In the peeling step S20, the positive electrode current collector may be completely dissolved, but it is not necessary to completely dissolve the positive electrode current collector as long as the positive electrode composite material can be peeled off from the positive electrode plate. When the positive electrode composite material is to be obtained without completely dissolving the positive electrode current collector, it is preferable to immerse the positive electrode plate in the alkaline solution while stirring. This allows the positive electrode composite material and the positive electrode current collector to be physically peeled off easily from the positive electrode plate.

Specific examples of alkaline solutions used in the peeling step S20 include a lithium hydroxide (LiOH) aqueous solution, a sodium hydroxide (NaOH) aqueous solution, and a potassium hydroxide (KOH) aqueous solution. Among these, a lithium hydroxide aqueous solution and a sodium hydroxide aqueous solution can be suitably employed as the alkaline solution. These aqueous solutions exhibit strong alkalinity, and when such alkaline solutions are used in the peeling step S20, they can selectively dissolve the positive electrode current collector while suppressing damage to the positive electrode active material in the positive electrode plate.

The alkaline solution used in the peeling step S20 suitably has a pH of 12 or higher (more suitably a pH of 13 or higher). If the pH of the alkaline solution is extremely low, the positive electrode current collector may not dissolve in the alkaline solution, thus failing to peel off the positive electrode composite material. This could potentially damage the positive electrode active material in the positive electrode composite material. On the other hand, if the pH of the alkaline solution is extremely high, a dissolution reaction of the positive electrode current collector may become intense, potentially leading to structural destruction of the positive electrode active material. Therefore, the alkaline solution used in the peeling step S20 suitably has a pH of 14 or lower (more suitably a pH of 13.5 or lower).

The temperature of the alkaline solution in the peeling step S20 is not particularly limited, but is suitably 20°C or higher (more suitably 30°C or higher, and even more suitably 40°C or higher). Thus, the dissolution of the positive electrode current collector in the alkaline solution can be promoted, thereby shortening the time of the peeling step S20. Meanwhile, the upper limit of the temperature of the alkaline solution in the peeling step S20 is not particularly limited, and may be, for example, 80°C or lower, 60°C or lower, or 50°C or lower.

### (2-3) Washing step S30

In some preferred embodiments, the washing step S30 is preferably performed before the sintering step S40. In the washing step S30, the positive electrode composite material is washed with water or an alkaline solvent. This allows the binder contained in the positive electrode composite material to be more suitably removed.

The solvent used in the washing step S30 can be water or an alkaline solvent. In some preferred embodiments, it is preferable to use an alkaline solvent as the solvent. This allows more suitable removal of the binder contained in the positive electrode composite material while more suppressing damage to the positive electrode active material in the positive electrode composite material. Examples of water that can be used as the solvent include distilled water, ion-exchanged water, pure water, and ultrapure water. When an alkaline solvent is used as the solvent, such an alkaline solvent is not particularly limited, and examples thereof include a sodium hydroxide (NaOH) aqueous solution, a lithium hydroxide (LiOH) aqueous solution, a potassium hydroxide (KOH) aqueous solution, and the like.

The solvent (water or alkaline solvent) used in the washing step S30 suitably has a pH of 6.5 or higher (more suitably a pH of 9 or higher, and even more suitably a pH of 10 or higher). If the pH of the solvent is extremely low, it may damage the positive electrode active material in the positive electrode composite material. On the other hand, if the pH of the solvent is extremely high, structural destruction of the positive electrode active material may occur. Therefore, the alkaline solution used in the washing step S30 suitably has a pH of 14 or lower (more suitably, a pH of 13.5 or lower).

The number of times of washing during the washing step S30 may be one or multiple (two or more), and is not particularly limited. The temperature of the solvent (water or alkaline solvent) used in the washing step S30 is not particularly limited and can be, for example, 20°C or higher and 80°C or lower. However, the washing step S30 described above is not essential.

### (2-4) Crushing step S50

In some preferred embodiments, the crushing step S50 can be performed to crush the sintered body obtained in the sintering step S40. The sintered body obtained in the sintering step S40 can be in the form of particle agglomerates (lumps) in which plural secondary particles of the positive electrode active material are further agglomerated. Here, the crushing step S50 can make the handling of the positive electrode active material easier. In the present specification, the term "crushing" refers to an operation of loosening the bonds between the agglomerated particles by applying mechanical energy to the particle agglomerates. Therefore, this operation is different from a "pulverization" in which the particle size of particles is further reduced by applying mechanical energy.

Means for the crushing step S50 can employ conventionally known methods, such as methods using a rotary dry sieve, a ball mill, a Ro-tap ball mill, a vibrating ball mill, a planetary ball mill, a rotary cutter mill, and a sand mill.

### (3) Others

When mixing magnesium hydroxide and the positive electrode composite material, the mixing timing is not particularly limited. For example, the mixing may be performed immediately before the sintering step S40, or the magnesium hydroxide may be mixed in when the peeling step S20 or washing step S30 is performed. Magnesium hydroxide is typically almost insoluble in either water or alkaline solvents. Thus, even when magnesium hydroxide and the positive electrode composite material are mixed together at the timing described above, the sintering step S40 can be performed with magnesium hydroxide present in the container.

### [Test Examples]

The following is a description of test examples regarding the technology disclosed herein. The contents of the test examples described below are not intended to limit the technology disclosed herein.

### <Production of Positive Electrode Active Material>

### (Example 1)

In this test, a new positive electrode plate with a positive electrode composite material layer arranged on a surface of a positive electrode current collector (i.e., where charge carriers were never pulled out) was prepared as the end material, and the following processes were performed on the above positive electrode plate. Note that the aluminum foil with a thickness of 15 µm was used as the positive electrode current collector for this test. The positive electrode composite material constituting the positive electrode composite material layer used in this test contained LiNi_{1/3}Co_{1/3}Mn_{1/3}O₂ (lithium nickel cobalt manganese composite oxide), which is a layered lithium composite oxide as the positive electrode active material, polyvinylidene fluoride (PVDF) as the binder, and acetylene black (AB) as the conductive material at a mass ratio of positive electrode active material : AB : PVDF = 85 : 10 : 5.

### (Peeling Step)

Next, the prepared positive electrode plate was immersed in a sodium hydroxide (NaOH) aqueous solution (at a concentration of 30 wt%) and allowed to stand at 40°C for 120 minutes. Consequently, the positive electrode composite material was peeled off from the positive electrode plate (in other words, the Al foil was dissolved), thereby obtaining a positive electrode composite material. The obtained positive electrode composite material was weighed before undergoing the subsequent sintering step.

### (Sintering step)

The positive electrode composite material and magnesium hydroxide (reagent available from Hayashi Pure Chemical Ind., Ltd.) (with an average particle size of 5 µm) were mixed using a mortar such that the presence proportion of magnesium hydroxide was 0.01 wt% when the entire amount of the positive electrode composite material obtained in the way above was 100 wt%. A mixture of the above positive electrode composite material and magnesium hydroxide was then placed in a container (sagger) and sintered under atmospheric conditions at a sintering temperature (maximum temperature) of 500°C for a sintering time of 3 hours. Consequently, the positive electrode active material according to Example 1 (hereinafter also referred to as a "recovered positive electrode active material") was obtained as a sintered body.

### (Measurement of F content in recovered positive electrode active material)

Here, the content (wt%) of F (fluorine) in the recovered positive electrode active material was measured and calculated. The F content was measured by ion chromatography analysis. The results are shown in the "F Content (wt%)" column of Table 1.

### (Example 2)

In Example 2, the positive electrode composite material obtained in the peeling step was washed with water. The number of times of washing the positive electrode composite material was set to one. The washed positive electrode composite material was filtered, vacuum-dried at 100°C, and then subjected to the sintering step. The rest of the process was the same as in Example 1.

### (Example 3)

In Example 3, the same process as in Example 2 was performed, except that a sodium hydroxide aqueous solution with a concentration of 0.3 wt% was used instead of water.

### (Examples 4 to 8)

In Examples 4 to 8, the sintering step was performed by setting the presence proportion of magnesium hydroxide to a value shown in the "Presence Proportion (wt%)" column in Table 1. The same process as in Example 3 was performed except for this point.

### (Examples 9 to 11)

In Examples 9 to 11, the sintering step was performed at a sintering temperature shown in Table 1. The same process as in Example 3 was performed except for this point.

### (Example 12)

In Example 12, the sintering step was performed with no magnesium hydroxide present therein. In other words, only the positive electrode composite material obtained in the peeling step was placed in a container (sagger) and sintered under atmospheric conditions at a sintering temperature of 500°C for a sintering time of 3 hours. The same process as in Example 1 was performed except for this point.

### (Example 13)

In Example 13, the sintering step was performed such that instead of magnesium hydroxide, calcium hydroxide (Ca(OH)₂) was present in a proportion of 0.01 wt% when the entire amount of the positive electrode composite material, which was to be sintered, was 100 wt%. The same procedure as in Example 3 was performed except for this point.

### <Fabrication of Secondary Battery for Evaluation>

Secondary batteries for evaluation were fabricated using the recovered positive electrode active materials obtained in Examples 1 to 13 described above, according to the following procedure.

### (Examples 1 to 13)

The recovered positive electrode active materials obtained in Examples 1 to 13, acetylene black (AB) as the conductive material, and polyvinylidene fluoride (PVDF) as the binder were mixed in N-methylpyrrolidone (NMP) at a mass ratio of recovered positive electrode active material : AB : PVDF = 85 : 10 : 5, thereby preparing a paste for formation of a positive electrode active material layer. This paste was applied on a positive electrode current collector (Al foil) with a thickness of 15 µm and dried to fabricate a positive electrode plate.

Natural graphite as the negative electrode active material, styrene butadiene rubber (SBR) as the binder, and carboxymethyl cellulose (CMC) as a thickener were mixed in ion-exchanged water at a mass ratio of natural graphite : SBR : CMC = 98 : 1 : 1, thereby preparing a paste for formation of a negative electrode composite material layer. This paste was applied on a Cu foil with a thickness of 10 µm and dried to prepare a negative electrode plate.

A porous polyolefin sheet with a thickness of 20 µm that had a three-layer structure of PP/PE/PP was used as a separator sheet.

The positive electrode plate, the negative electrode plate, and the separator sheet described above were overlapped on top of each other, and electrode terminals were attached thereto. Then, they were housed in a laminate case. Subsequently, a nonaqueous electrolyte solution was poured into the laminated case, and the laminated case was hermetically sealed. Note that the nonaqueous electrolyte used was produced by dissolving LiPF₆ as a support salt at a concentration of 1.0 mol/L in a mixed solvent containing ethylene carbonate (EC), dimethyl carbonate (DMC), and ethyl methyl carbonate (EMC) at a volume ratio of 3:4:3. In this way, the secondary batteries for evaluation according to Examples 1 to 13 were obtained.

### (Reference Example)

In addition, a secondary battery for evaluation according to Reference Example was fabricated in order to compare the recovered positive electrode active materials according to Examples 1 to 13 with a new positive electrode active material. Specifically, in Reference Example, the specific positive electrode active material was prepared in the same manner as in Examples 1 to 13, except that it was new. A secondary battery for evaluation according to Reference Example was fabricated under the same conditions as those described above, except that such a new positive electrode active material was used.

### <Activation>

Each of the above fabricated secondary batteries for evaluation was placed under an environment of 25°C. For activation (initial charging), a constant current and constant voltage method was used. Specifically, after constant-current charging of each secondary battery for evaluation to 4.2 V at a current value of 1/3 C, constant-voltage charging was performed thereon until the current value reached 1/50 C, thereby bringing the battery into a fully charged state. Thereafter, constant-current discharge was performed on each secondary battery for evaluation to 3.0 V at a current value of 1/3 C.

### <Measurement of Initial Resistance>

After the activation process of each secondary battery for evaluation, its State Of Charge (SOC) was adjusted to 50%, and the battery was placed under an environment of 25°C. The battery was discharged for 10 seconds at a current value of 100 mA, and a voltage drop ΔV thereof was determined. The voltage drop ΔV was divided by a discharge current value (100 mA) to thereby calculate a battery resistance, which was defined as an initial resistance. When the initial resistance of the secondary battery of Reference Example was 1, the ratio of the initial resistance of each of the other secondary batteries for evaluation of Examples to that of the secondary battery for evaluation of Reference Example was determined. The results are shown in the "Initial Resistance" column of Table 1. It shows that the smaller the value of "Initial Resistance" in Table 1, the better the initial resistance property became.

### <Evaluation of Resistance Increase Rate during Durability>

Each secondary battery for evaluation was placed in an environment of 60°C, charged at a constant current to 4.1 V at a charge rate of 1 C, and then discharged at a constant current to 3.0 V at a discharge rate of 1 C. This series of charging-discharging was defined as one cycle. The secondary battery was subjected to the charging-discharging 200 cycles. Next, the battery resistance after 200 cycles was determined in the same manner as the initial resistance measurement, and the durability resistance increase rate of the battery was determined from the following formula: Durability Resistance Increase Rate = Battery Resistance after 200 Cycles / Initial Resistance. The results are shown in "Durability Resistance Increase Rate" column of Table 1. It shows that the smaller the value of "Durablity Resistance Increase Rate" in Table 1, the better the resistance property during durability became.

### [Table 1]

**Table 1**

| | Sintering Step | | | Washing Step | Recovered Positive Electrode Active Material | | |
|---|---|---|---|---|---|---|---|
| | Present Compound | Presence Proportion (wt%) | Sintering Temperature (∘ C) | Solvent | F Content (wt%) | Initial Resistance | Durability Resistance Increase Rate |
| Example 1 | Mg(OH)₂ | 0.01 | 500 | None | 1.425 | 0.95 | 0.95 |
| Example 2 | Mg(OH)₂ | 0.01 | 500 | Water | 0.4 | 0.95 | 0.95 |
| Example 3 | Mg(OH)₂ | 0.01 | 500 | NaOH aqueous solution | 0.4 | 0.85 | 0.95 |
| Example 4 | Mg(OH)₂ | 0.03 | 500 | NaOH aqueous solution | 0.35 | 0.8 | 0.95 |
| Example 5 | Mg(OH)₂ | 0.3 | 500 | NaOH aqueous solution | 0.3 | 0.75 | 0.9 |
| Example 6 | Mg(OH)₂ | 0.7 | 500 | NaOH aqueous solution | 0.25 | 0.7 | 0.85 |
| Example 7 | Mg(OH)₂ | 1 | 500 | NaOH aqueous solution | 0.25 | 0.7 | 0.85 |
| Example 8 | Mg(OH)₂ | 3 | 500 | NaOH aqueous solution | 0.25 | 0.87 | 0.85 |
| Example 9 | Mg(OH)₂ | 0.7 | 600 | NaOH aqueous solution | 0.2 | 0.65 | 0.85 |
| Example 10 | Mg(OH)₂ | 0.7 | 800 | NaOH aqueous solution | 0.2 | 0.65 | 0.85 |
| Example 11 | Mg(OH)₂ | 0.7 | 900 | NaOH aqueous solution | 0.2 | 0.7 | 0.85 |
| Example 12 | None | 0 | 500 | None | 1.9 | 1 | 1 |
| Example 13 | Ca(OH)₂ | 0.01 | 500 | NaOH aqueous solution | 0.35 | 1 | 1 |

From the results in Table 1, it has been found that the sintering of the positive electrode composite material in the presence of magnesium hydroxide reduced the degradation in the initial resistance and in the resistance property during durability. In other words, by sintering the positive electrode composite material in the presence of magnesium hydroxide, the positive electrode active material that reduced both the initial resistance and the resistance increase rate during durability could be obtained. On the other hand, in Example 13, where calcium hydroxide was used in the sintering step, instead of magnesium hydroxide, good results in resistance property were not obtained. This is thought to be because calcium contained in calcium hydroxide reacted with sulfate traces (sulfate ion, SO₄²⁻) derived from the positive electrode active material to form CaSO₄, which affected the resistance property.

The above is a detailed description of the technology disclosed herein, provided for illustrative purposes only and not intended to limit the scope of the claims. The technology described in the claims includes various modifications and changes to the specific examples illustrated above. That is, the technology disclosed herein encompasses the forms described in the following items.

### <Item 1>

A production method for a positive electrode active material after sintering, the method comprising:
a preparation step of preparing an end material that includes a positive electrode composite material including a positive electrode active material for a secondary battery that has never been performing intercalation and deintercalation of a charge carrier and a binder containing fluorine; and
a sintering step of sintering the positive electrode composite material in a container, wherein
the sintering step is performed with magnesium hydroxide present in the container.

### <Item 2>

The production method according to item 1, further comprising: a washing step of washing the positive electrode composite material with water or an alkaline solvent before the sintering step.

### <Item 3>

The production method according to item 1 or 2, wherein in the sintering step, the magnesium hydroxide is present in a proportion of 0.01 wt% or more and 3 wt% or less when an entire amount of the positive electrode composite material is 100 wt%.

### <Item 4>

The production method according to any one of items 1 to 3, wherein a maximum temperature during the sintering step is 500°C or higher and 900°C or lower.

### <Item 5>

The production method according to any one of items 1 to 4, wherein the positive electrode active material of the end material includes a lithium composite oxide having a layered structure.

## Claims

1. A production method for a positive electrode active material after sintering, the method comprising:
a preparation step (S10) of preparing an end material (10) that includes a positive electrode composite material including a positive electrode active material for a secondary battery that has never been performing intercalation and deintercalation of a charge carrier and a binder containing fluorine; and
a sintering step (S40) of sintering the positive electrode composite material in a container, wherein
the sintering step (S40) is performed with magnesium hydroxide present in the container.

2. The production method according to claim 1, further comprising:
a washing step (S30) of washing the positive electrode composite material with water or an alkaline solvent before the sintering step (S40).

3. The production method according to claim 1 or 2, wherein in the sintering step (S40), the magnesium hydroxide is present in a proportion of 0.01 wt% or more and 3 wt% or less when an entire amount of the positive electrode composite material is 100 wt%.

4. The production method according to any one of claims 1 to 3, wherein a maximum temperature during the sintering step (S40) is 500°C or higher and 900°C or lower.

5. The production method according to any one of claims 1 to 4, wherein the positive electrode active material of the end material includes a lithium composite oxide having a layered structure.
